# EUROPÄISCHE PATENTSCHRIFT

(11) **EP 3 126 440 B1**
(45) Veröffentlichungstag und Bekanntmachung des Hinweises auf die Patenterteilung: **15.01.2020**
(21) Anmeldenummer: 15713771.2
(22) Anmeldetag: 02.04.2015
(51) Int. Cl.: C08K 7/14, C08K 3/34, C08K 11/00, C08L 23/00, C08L 33/00, C08L 69/00, C08L 77/00

(54) **BIOMATERIALVERBUNDWERKSTOFF**
BIOMATERIAL COMPOSITE
BIOMATÉRIAU COMPOSITE

(30) Priorität: 04.04.2014 DE 102014104869
(43) Veröffentlichungstag der Anmeldung: 08.02.2017
(73) Patentinhaber: Meyerhoff, Hans-Peter, 64625 Bensheim (DE)
(72) Erfinder: Meyerhoff, Hans-Peter, 64625 Bensheim (DE)
(74) Vertreter: Patentanwälte Gierlich & Pischitzis Partnerschaft mbB
(86) Internationale Anmeldenummer: PCT/EP2015/057420
(87) Internationale Veröffentlichungsnummer: WO 2015/150566

(56) Entgegenhaltungen:
- CN-A- 103 554 752
- DE-A1-102012 203 302

## Beschreibung

### Gebiet der Erfindung

Die Erfindung betrifft faserverstärkte Kunststoffe mit biologischen Füllmaterialien.

Als Biowerkstoffe werden Kunststoffe bezeichnet, welche vollständig oder zu relevanten Anteilen auf nachwachsenden Rohstoffen basieren. Im Hinblick auf steigende Kosten für Öl ist der Einsatz von Biowerkstoffen nicht nur aus Gründen der Nachhaltigkeit interessant, sondern auch aufgrund von wirtschaftlichen Überlegungen.

Aus jüngerer Zeit gibt es viele Beispiele für Biowerkstoffe, meistens ölbasierte Kunststoffe mit einem bestimmten Anteil an biologisch erzeugten Füllmaterialien und/oder Fasern.

Ein relativ neues Gebiet ist der Ersatz der Kunststoffe durch Kunststoffe aus nachwachsenden Rohstoffen, z. B. Polypropylen aus Zuckerrohr.

Sehr häufig wird biologisches Füllmaterial auf der Basis von Holz verwendet. Dies begrenzt die Temperaturen bei der Verarbeitung auf unter 200 °C.

Ein häufiges Problem von solchen Biowerkstoffen ist die oft unzureichende Stabilität in Bezug auf E-Modul und/oder der Schlagzähigkeit.

Außerdem führt das Einbringen eines meistens hydrophilem Materials in eine hydrophobe Umgebung, wie Kunststoffe, dazu, dass die Biowerkstoffe (z. B. Holzfasern usw.) zur Wasseraufnahme neigen. Diese geht meistens mit einer Veränderung im Volumen einher, z. B. um 1 bis 6 %. Das macht diese Werkstoffe ungeeignet für Anwendungen im Außenbereich oder für feuchte Umgebungen. Jegliche Nachbehandlung (Bohren, Fräsen, Bearbeiten) öffnet die Poren der Holzfasern - und führt zu einer Kapillarwirkung und fördert somit das Aufquellen des Materials.

Daneben sind auch Geruchsbelästigungen durch den organischen Anteil bekannt und je nach Stahlqualität Schädigungen der Stahlwerkzeugoberflächen.

Auch die UV-Beständigkeit von solchen Werkstoffen ist ein Problem.

Es besteht daher ein Bedarf an Biowerkstoffen, welche die Nachteile der bekannten Biowerkstoffe (z.B. WPC wood plastic composite) überwinden und insbesondere eine geringe Aufnahme von Wasser bzw. Quellung, sowie eine hohe Schlagzähigkeit aufweisen.

Gleichzeitig ist es vorteilhaft, wenn der Biowerkstoff nicht mit der Nahrungsmittelproduktion konkurriert.

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Die Aufgabe wird gelöst durch eine Zusammensetzung umfassend
a) mindestens einen Thermoplasten;
b) Füllmaterial mit einem Gehalt an Siliziumdioxid von mindestens 80 Gew.-%;
c) mindestens eine Langglasfaser mit einer Länge von mindestens 0,5 mm und einem Durchmesser von 3 bis 25 µm, wobei das biologische Füllmaterial Reishülsenasche umfasst.

Durch den biologischen Füllstoff wird der Gehalt an nachwachsenden Rohstoffen im Verbundwerkstoff erhöht. Dadurch können die meistens ölbasierten Kunststoffe eingespart werden.

Insbesondere die Langglasfasern mit den genannten Ausmaßen führen zu einer hohen Schlagzähigkeit und Zugfestigkeit, trotz eines hohen Anteils an biologischem Füllstoff.

Im Zusammenhang mit dieser Erfindung werden die Bezeichnungen "Langglasfasern" und "Filamente" als Synonym verwendet und bezeichnen eine endlose oder kontinuierliche Glasfaser, deren Länge lediglich durch die Kapazität der Spule, auf der das Filament gewickelt ist, begrenzt ist. Die Faserlänge der Filamente wird durch die Schnittlänge des Granulats oder anderen Schritten der Weiterverarbeitung bestimmt. Eine Langglasfaser weist dabei eine Länge von mindestens 0,5 mm auf. Typischerweise hat ein Faserfilament einen Durchmesser von 3 bis 25, vorzugsweise 8 bis 22 Mikrometer. Wenn eine Zusammensetzung oder ein Formkörper eine Vielzahl von Langglasfasern umfasst, so wird unter der Länge der Langglasfasern die mittlere Faserlänge verstanden. Die Fasern weisen daher ein Verhältnis von Länge zu Durchmesser von mindestens 20 auf.

Dabei werden unter Thermoplast (a) beliebige thermoplastisch verformbare Polymere verstanden, die neu oder Recyclat/Mahlgüter aus alten thermoplastischen Polymeren sein können. Bevorzugt sind Thermoplasten mit einer Viskosität entsprechend einem Schmelzindex (MFI, 230 °C / 2,16 kg) von Polypropylen (PP) von mindestens etwa 20 g/10 Min. Bevorzugt sind solche, deren Viskosität einem MFI von PP von 20 bis 300 g/10 min, besonders bevorzugt von 50 g/10 min bis 200 g/10 min, entspricht. Dies können beispielsweise Polyolefine, Polyamide, Polyimide, Polystyrole, Polycarbonate, Polyester, Polyether, Polysulfone, wie z. B. Polyethylenterephthalat oder Polybutylenterephthalate, Polyetherketone, Polyethersulfone, Polyetherimide, Polyphenylenoxid, Polyphenylensulfid, Low density-Polyethylen (LDPE), high density Polyethylen (HDPE), Polystyrol, oder Polyvinylacetat oder deren Copolymerisate oder Mischpolymerisate sein. Beispiele für Mischpolymerisate sind Acrylester-Styrol-Acrylnitril (ASA), Acrylnitril-Butadien-Styrol (ABS), Styrol-Acrylnitril-Copolymerisat (SAN), Alphamethyl-Styrol-Acrylnitril-Copolymerisat (AMSAN) oder Styrol-Butadien-Styrol (SBS).

Als Thermoplast kann auch Polyvinylacetat eingesetzt werden.

Als Polyamide können beispielsweise Polyamid-6, Polyamid-6,6, Mischungen und entsprechende Copolymerisate eingesetzt werden.

Der mindestens eine Thermoplast kann auch Teil eines Blends sein, beispielsweise in Blends aus Styrolpolymeren wie SAN mit Polymethacrylnitril (PMI) oder chloriertem Polyethylen, oder Polyvinylchlorid mit Methylacrylat-Butadien-StyrolCopolymerisat (MBS), ASA und/oder ABS. Wichtig ist dabei, dass die erhaltene Mischung noch ein Thermoplast ist.

Bevorzugt ist mindestens ein Thermoplast ein Polyolefin, besonders bevorzugt Polypropylen (PP) oder Polyethylen (PE) und deren Copolymerisate oder Mischpolymerisate wie etwa mit EPDM modifiziertes PP oder auch im Reaktor PP-EPDM hergestellte Typen, z. B. nach Kaskadenprinzip erhöht jede Stufe den EPDM-Anteil um 5 %.

Es kann sich um kristallines oder amorphes Polyolefin handeln.

In einer bevorzugten Weiterbildung der Erfindung ist mindestens 50 Gew.-%, 60 Gew.-%, 70 Gew.-%, 90 Gew.-%, bevorzugt 100 Gew.-% des eingesetzten Thermoplasts mindestens ein Polyolefin.

In einer weiteren Ausführungsform der Erfindung wird das Polyolefin mindestens anteilig ebenfalls aus biologischen Quellen, z. B. Zuckerrohr, gewonnen. Zusammen mit dem biologischen Füllstoff kann so ein Verbundmaterial erhalten werden, das zu mehr als 30 Gew.-%, bevorzugt mehr als 50 Gew.-%, besonders bevorzugt mehr als 65 Gew.-% aus biologischen Quellen hergestellt wurde.

In einer Ausführungsform der Erfindung weist der Thermoplast (a) ein mittleres Molekulargewicht M_{W} im Bereich von 10.000 bis 200.000 Da auf (gemessen durch Ultrazentrifuge), bevorzugt von 100.000 bis 200.000 Da.

Dabei schließen Polyethylen und Polypropylen jeweils auch Copolymere des Ethylens bzw. Propylens mit einem oder mehreren α-Olefin oder Styrol mit ein. So werden im Rahmen der vorliegenden Erfindung unter Polyethylen auch Copolymere mit umfasst, die neben Ethylen als Hauptmonomer (mindestens 50 Gew.-%) ein oder mehrere Comonomere einpolymerisiert enthalten, bevorzugt gewählt aus Styrol oder α-Olefine wie beispielsweise Propylen, 1-Buten, 1-Hexen, 4-Methyl-1-Penten, 1-Octen, 1-Decen, 1-Dodecen, n-α-C₂₂H₄₄, n-α-C₂₄H₄₈ und n-α-C₂₀H₄₀. Im Rahmen der vorliegenden Erfindung werden unter Polypropylen auch Copolymere mit umfasst, die neben Propylen als Hauptmonomer (mindestens 50 Gew.-%) ein oder mehrere Comonomere einpolymerisiert enthalten, bevorzugt gewählt aus Styrol, Ethylen, 1-Buten, 1-Hexen, 4-Methyl-1-Penten, 1-Octen, 1-Decen, 1-Dodecen, n-α-C₂₂H₄₄, n-α-C₂₄H₄₈ und n-α,-C₂₀H₄₀.

Die Zusammensetzungen enthalten vorzugsweise 10 bis 70 Gew.-%, vorzugsweise 20 bis 70 Gew.-%, besonders bevorzugt 40 bis 60 Gew.-% des Thermoplasts (a).

Bevorzugt beträgt die Glasübergangstemperatur (T_{G}, bestimmbar als Wendepunkt im DSC-Diagramm) für den mindestens einen Thermoplasten unter 150 °C, bevorzugt liegt sie zwischen 60 °C und 120 °C.

Das biologische Füllmaterial kann aus vielen unterschiedlichen Quellen stammen. Bevorzugt handelt es sich um biologische Füllstoffe mit einem hohen Anteil anorganischer Bestandteile. Besonders bevorzugt sind biologische Füllmaterialien mit einem Aschegehalt von über 5 Massenprozent, bevorzugt von über 10 Massenprozent (Aschegehalt 815 °C nach DIN 51719). Alle Angaben von Normen bei der Messung von Eigenschaften, z. B. DIN 51719, beziehen sich auf die zur zum Zeitpunkt der Anmeldung neueste Version der jeweiligen Norm.

Besonders bevorzugt sind pflanzliche Quellen mit einem hohen Anteil an Siliziumdioxid, besonders bevorzugt mit einem Anteil von mindestens 10 Gew.-%, bevorzugt mindestens 15 Gew.-% (bezogen auf das biologische Füllmaterial, gemessen mit Röntgenfluoreszenzanalyse), oder über 20 Gew.-%. Bevorzugt sind daher Quellen mit einem Anteil von 10 bis 98 Gew.-%, besonders bevorzugt 15 bis 98 Gew.-% oder 20 bis 98 Gew.-%.

Ein hoher Anteil an Siliziumdioxid und ein damit einhergehender geringerer Anteil an organischen Materialien sorgen dafür, dass die Wasseraufnahme der erfindungsgemäßen Zusammensetzungen nur gering ist. Bevorzugt ist eine Wasseraufnahme von ≤ 0,3 Massen-%, bevorzugt ≤ 0,2 (gemessen nach ISO 62).

Es kann erforderlich sein, dass biologische Füllmaterial vor dem Einsatz zu trocknen. Dies ist im Regelfall nicht notwendig, da die Entgasung auf dem Extruder und später auf der Spritzgussmaschine dafür sorgt.

Bevorzugt handelt es sich um einen biologischen Füllstoff, welcher aus einem nachwachsenden Rohstoff gewonnen wird.

Das biologische Füllmaterial wird bevorzugt gewonnen aus Reishülsen, Reisspelzen, Sisal, Hanf, Baumwolle, Kiefernholz, Kenaf, Bambus, Flachs, Pinienholz und/oder Zuckerrohr, bevorzugt aus Reishülsen. Reishülsen weisen in der Regel einen Gehalt an Siliziumdioxid von mehr als ca, 20 Gew.-% auf.

Bevorzugt handelt es sich um verarbeitete Produkte der vorgenannten Komponenten, besonders bevorzugt aus diesen Komponenten gewonnene Asche, insbesondere Reishülsenasche, Diese Asche zeichnet sich durch einen hohen Anteil an SiO₂ aus.

Viele der vorgenannten Komponenten fallen als Nebenprodukt oder Abfallprodukt an. Sie stehen daher häufig mengenmäßig wirtschaftlich zur Verfügung,

Auch bleibt durch die Verwendung der Reishülsen eine Konkurrenz mit der Nahrungsmittelproduktion aus. Gleichzeitig ist das Produkt in großen Mengen verfügbar. Die Asche wird vor allem als Zusatzstoff für Betone oder Stahl eingesetzt. Auch kann die bei der Herstellung entstehende Wärme zur Energieerzeugung eingesetzt werden.

Der Anteil an SiO₂ im biologischen Füllmaterial liegt bei mindestens 80 Gew.-% (bestimmt mit Röntgenfluoreszenzspektroskopie), bevorzugt mindestens 90 Gew.-%. Der Gehalt kann dabei bei 80 Gew.-% bis 99 Gew.-%, bevorzugt 80 Gew.-% bis 98 Gew.-% liegen. Besonders bevorzugt bei 90 Gew.-% bis 99 Gew.-%.

Das Siliziumdioxid kann amorphe und kristalline Anteile umfassen. Bevorzugt ist amorphes Siliziumdioxid. Bevorzugt umfassen die amorphen Anteile mindestens 50 Vol.-% Siliziumdioxids, bevorzugt mindestens 80 Vol.-%.

Insbesondere Reishülsenasche weist einen hohen Anteil an amorphem Siliziumdioxid auf. Abhängig von der Herstellung kann der Anteil von kristallinem SiO₂, insbesondere von Cristobalit minimiert werden, insbesondere auf unter 20 Gew.-%, bevorzugt unter 10 Gew.-%, ganz besonders bevorzugt auf unter 5 Gew.-%.

Das biologische Füllmaterial umfasst noch bis zu 30 Gew.-% weitere Bestandteile, bevorzugt bis zu 20 Gew.-%. Bevorzugt sind weitere Oxide von Fe, Al, Zr, Na, K, Mg, Mn, Ca mit jeweils Anteilen von 0 bis 10 Gew.-%, bevorzugt 0 bis 5 Gew.-%, besonders bevorzugt mit Anteilen von 0 bis 3 Gew.-%.

In einer Ausführungsform der Erfindung umfasst das biologische Füllmaterial mindestens folgende Bestandteile:

| | Gew.-% |
|---|---|
| SiO₂ | 80-99 |
| Fe₂O₃ | 0-3 |
| CaO | 0-3 |
| MgO | 0-3 |
| K₂O | 0-5 |
| Na₂O | 0-5 |
| ZrO₂ | 0-5 |

Zusätzlich können immer auch noch weitere Bestandteile, wie 0 bis 10 Gew.-% Kohlenstoff, bevorzugt 0 bis 5 Gew.-%, besonders bevorzugt 0 bis 1 Gew.-%, enthalten sein. Des Weiteren können noch Verunreinigungen und in geringen Mengen Feuchtigkeit vorhanden sein.

In einer weiteren Ausführungsform der Erfindung umfasst das biologische Füllmaterial mindestens folgende Bestandteile:

| | Gew.-% |
|---|---|
| SiO₂ | 80-99 |
| Fe₂O₃ | 0,1-1 |
| CaO | 0,1-1 |
| MgO | 0,1-2 |
| K₂O | 0,1-5 |
| Na₂O | 0,1-5 |
| ZrO₂ | 0-5 |

Zusätzlich können immer auch noch weitere Bestandteile, wie 0 bis 10 Gew.-% Kohlenstoff, bevorzugt 0 bis 5 Gew.-%, besonders bevorzugt 0 bis 1 Gew.-%, ganz besonders bevorzugt 0,1 bis 1 Gew.-%, enthalten sein. Des Weiteren können noch Verunreinigungen und in geringen Mengen Feuchtigkeit vorhanden sein.

Bevorzugt weist das biologische Füllmaterial eine Temperaturstabilität von mindestens 1000 °C auf.

Füllstoffe mit so hohem Gehalt an SiO₂ weisen nicht nur eine geringe Wasseraufnahmefähigkeit auf, sie erlauben auch höhere Temperaturen bei der Verarbeitung. Daher können solche Füllstoffe in viele Thermoplaste eingearbeitet werden. So sind auch Verarbeitungstemperaturen von über 150 °C oder über 200 °C möglich. Dies erlaubt beispielsweise die Einarbeitung in Polyamide wie Polyamid-6,6.

Bevorzugt weist das biologische Füllmaterial eine Dichte von bis zu 2,5 g/cm³ auf, bevorzugt bis zu 2,4 g/cm³, bevorzugt von bis zu 2,3 g/cm³. Bevorzugt ist eine Dichte von mindestens 1,8 g/cm³. Die Dichte liegt daher bevorzugt in einem Bereich von 1,8 g/cm³ bis 2,5 g/cm³, insbesondere 1,8 g/cm³ bis 2,3 g/cm³, ganz besonders von 1,8 bis 2,2 g/cm³. Die Dichte bezieht sich dabei auf die Dichte des Materials nicht die Schüttdichte.

Die Partikel des biologischen Füllstoffs sind bevorzugt leicht porös. Bevorzugt hat es eine spezifische Oberfläche von 15 bis 30 m²/g (BET-Messung mit Stickstoff).

Insbesondere Reishülsenasche weist geringe Dichte von bis zu 2,3 g/cm³ auf, insbesondere von 1,8 bis 2,2 g/cm³. Die Dichte kann entsprechend durch das Herstellungsverfahren beeinflusst werden. Zusammen mit dem hohen Gehalt an Siliziumdioxid ist es möglich ähnliche hoch gefüllte Komposite herzustellen, welche im Vergleich zu üblichen Füllmaterialien wie Talg oder Kreide, Glimmer, Wollastonit usw., eine geringere Dichte aufweisen.

In einer Ausführungsform der Erfindung liegt das biologische Füllmaterial als Pulver vor. Bevorzugt mit einer Schüttdichte von 200 bis 800 kg/m³.

Bevorzugt haben Suspensionen des biologischen Füllmaterials in Wasser einen pH von 4-7 in einer anderen Ausführungsform von 6-8 (jeweils gemessen als 5 Gew.-% bei Raumtemperatur).

Der Anteil des biologischen Füllmaterials liegt bevorzugt bei mindestens 10 Gew.-% bezogen auf die gesamte Zusammensetzung, besonders bevorzugt von 10 bis 80 Gew.-%, besonders bevorzugt ist ein Anteil von 10 Gew.-% bis 40 Gew.-%.

In einer anderen Ausführungsform der Erfindung beträgt der Anteil des biologischen Füllmaterials mindestens 20 Volumen-%, bevorzugt von 20 bis 45 Volumen-% der Zusammensetzung.

Als Komponente (c) werden Langglasfasern verwendet, die eine endlose oder kontinuierliche Glasfaser, bzw. Filamente darstellen, deren Länge lediglich durch die Kapazität der Spule, auf der das Filament gewickelt ist, begrenzt ist. Die resultierende Faserlänge in der Zusammensetzung wird durch deren Verarbeitung bestimmt. Im Falle eines thermoplastischen Granulats wird die Faserlänge durch die Schnittlänge des Granulats bestimmt, d.h. die Schnittlänge des Granulats ist 5 bis 50 mm, vorzugsweise 5 bis 30 mm, besonders bevorzugt 7 bis 25 mm (Der Ausdruck "Granulat" bezeichnet im Zusammenhang mit der Erfindung die Kunststoff-Pellets. Granulat ist die übliche Form, in der thermoplastische Zusammensetzungen mit oder ohne Additiven kommerziell verfügbar sind). Typischerweise hat ein Faserfilament einen Durchmesser von 3 bis 25, vorzugsweise 8 bis 22 Mikrometer.

Die Langglasfasern selbst können dabei ausgewählt sein aus der Gruppe aus E-Langglasfasern, A-Langglasfasern, C-Langglasfasern, D-Langglasfasern, M-Langglasfasern, S-Langglasfasern und/oder R-Langglasfasern, wobei E-Langglasfasern bevorzugt sind.

Der Anteil an Langglasfasern an der Zusammensetzung beträgt bevorzugt mindestens 5 Gew.-%, besonders bevorzugt mindestens 10 Gew.-%. Bevorzugte Bereiche sind 5 bis 30 Gew.-% und 10 bis 25 Gew.-%. Ein Anteil von mindestens 10 Gew.-% führt zu einem starken Anstieg der Schlagzähigkeit und des E-Moduls im fertigen Produkt.

Überraschenderweise konnte nun gefunden werden, dass die Zugabe von erfindungsgemäßen biologischen Füllstoffen die Schlagzähigkeit nochmals verbessert. So weisen Zusammensetzungen mit einem vergleichbaren Gesamtanteil von Langglasfasern und biologischem Füllmaterial bessere Eigenschaften, als eine vergleichbare Zusammensetzung nur mit Langglasfasern auf.

Die Langglasfasern können mit einer sog. Schlichte oberflächenmodifiziert sein und sind mit den eingesetzten Thermoplasten oder Thermoplast-Blends durchtränkt oder imprägniert. Die Langglasfasern für sich gesehen können auch mit einer Amino- oder Epoxysilanbeschichtung versehen sein. Bevorzugt ist eine Silanschlichte, beispielsweise mit Amino- oder Hydroxygruppen modifizierte Silanen, wie Aminoalkyl- oder Hydoxyalkyltrialkyoxysilanen.

Um gute mechanische Eigenschaften im resultierenden langglasfaser-haltigem Granulat und vor allem in dem daraus hergestellten Bauteil zu gewährleisten, soll eine möglichst gute Benetzung bzw. Imprägnierung erreicht werden.

Dies gilt auch für die sogenannten Schnittglasfasern mit einem üblichen Länge/Durchmesserverhältnis (L/D Verhältnis). Dies gilt auch für die kontinuierlichen Glasfasern-Langglasfasern Composites, und Tapes in den üblichen technisch möglichen L/D Verhältnissen.

Es wird angenommen, dass der hohe Siliziumgehalt, insbesondere amorphes Silizium, der biologischen Komponente zur Kompatibilität der Glasfasern im Verbundwerkstoff beiträgt.

In einer Ausführungsform der vorliegenden Erfindung umfasst die Zusammensetzung weiterhin mindestens einen Zuschlagstoff. Beispiele für Zuschlagstoffe sind Verträglichkeitsvermittler oder Koppler (*coupling agents*), beispielsweise Verbindungen auf der Basis von Maleinsäureanhydrid, maleinierte Polyethylene oder maleinierte Polypropylene, oder Copolymere aus Ethylen oder Propylen und Acrylsäure, Methacrylsäure oder Trimellitsäure. Der Gehalt an solchen Kopplern liegt bevorzugt zwischen 0 und 8 Gew.-%.

Weitere Beispiele für geeignete Zuschlagstoffe sind Stabilisatoren, insbesondere Licht- und UV-Stabilisatoren, beispielsweise sterisch gehinderte Amine (HALS), 2,2,6,6-Tetramethylmorpholin-N-Oxide oder 2,2,6,6-Tetramethylpiperidin-N-Oxide (TEMPO) und andere N-Oxydderivate wie NOR.

Weitere Beispiele für geeignete Zuschlagstoffe sind UV-Absorber wie beispielsweise Benzophenon oder Benzotriazole.

Weitere Beispiele für geeignete Zuschlagstoffe sind Pigmente, die ebenfalls eine Stabilisierung gegen UV-Licht bewirken können, wie beispielsweise Titandioxid (z. B. als Weißpigment), bzw. geeignete Ersatzweißpigmente, Ruß, Eisenoxid, andere Metalloxide und organische Pigmente, beispielsweise Azo- und Phthalocyanin-Pigmente.

Weitere Beispiele für geeignete Zuschlagstoffe sind Biozide, insbesondere Fungizide.

Weitere Beispiele für geeignete Zuschlagstoffe sind Säurefänger, beispielsweise Erdalkalihydroxide oder Erdalkalioxide oder Fettsäuresalze von Metallen, insbesondere Metallstearate, besonders bevorzugt Zinkstearat und Calciumstearat, und weiterhin Kreide und Hydrotalcite. Dabei können einige Fettsäuresalze von Metallen, insbesondere Zinkstearat und Calciumstearat, auch als Schmiermittel bei der Verarbeitung wirken.

Weitere Beispiele für Zuschlagstoffe sind Antioxidantien wie auf Basis von Phenolen, wie alkylierte Phenole, Bisphenole, bicyclische Phenole oder Antioxidantien auf Basis von Benzofuranonen, organischen Sulfiden und/oder Diphenylaminen.

Weitere Beispiele für geeignete Zuschlagstoffe sind Weichmacher, z. B. Ester von Dicarbonsäuren wie Phthalate, organische Phosphate, Polyester und Polyglycolderivate.

Weitere Beispiele für geeignete Zuschlagstoffe sind Schlagzähmodifikatoren (z. B. Polyamide, Polybutylenterephthalate (PBT)) und Flammschutzmittel. Beispiele für Flammschutzmittel, insbesondere Polycarbonatbasierende Zusammensetzungen, sind Halogenverbindungen, insbesondere auf Basis von Chlor und Brom sowie Phosphor enthaltende Verbindungen. Bevorzugt enthalten die Zusammensetzungen phosphorhaltige Flammschutzmittel aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte Phosphorverbindungen können alleine oder in beliebiger Kombination mit anderen Flammschutzmitteln eingesetzt werden. Weitere Flammschutzmittel können organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg-, Al-Hydroxid, anorganische Verbindungen wie Antimonoxide, Bariummetaborat, Hydroxoantimonat, Zirkonoxid, Zirkonhydroxid, Molybdenoxid, Ammoniummolybdat, Zinkborat, Ammoniumborat, Bariummetaborat, Talk, Silikat, Siliziumoxid und Zinnoxid sowie Siloxanverbindungen sein.

Die Flammschutzmittel werden oft in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden fluorierte Polyolefine als Antidrippingmittel eingesetzt.

Durch den hohen Siliziumdioxidanteil des biologischen Füllmaterials kann der Einsatz von Flammschutzmitteln reduziert werden.

Weitere Beispiele für Zuschlagstoffe sind anorganische Füllstoffe, die in Teilchen und/oder Schichtform vorliegen, wie Talkum, Kreide, Kaolin, Mica, Wollastonit, Kaolin, Kieselsäuren, Magnesiumkarbonat, Magnesiumhydroxid, Kalziumkarbonat, Feldspat, Bariumsulfat, Ferrit, Eisenoxid, Metallpulver, Oxide, Chromate, Glaskugeln, Hohlglaskugeln, Pigmente, Silica, hohlkuglige Silikatfüllstoffe und/oder Schichtsilikate. Diese haben bevorzugt eine Partikelgröße zwischen 2 und 500 µm (gemessen mit Lichtstreuung).

Die Zusammensetzung kann auch zusätzlich Vernetzer enthalten, welche zu einer Vernetzung des Thermoplasts, beispielsweise bei Bestrahlung oder Erwärmung führen können.

Falls die aus der Zusammensetzung hergestellten Formmassen aufgeschäumt sein sollen, können chemische oder physikalische Treibmittel in flüssiger oder fester Form in die Zusammensetzung eingeführt werden, z.B. Natriumbicarbonat mit Citronensäure oder thermolabile Carbamate. Vorzugsweise werden hierzu endotherme Schäummittel verwendet. Eine weitere Möglichkeit, zu einer Schäumung zu gelangen, ist die Verwendung von Mikrosphären, die beispielsweise mit Gasen oder verdampfbaren Flüssigkeiten gefüllt sind. Zur Füllung eignen sich besonders Alkane wie Butan, Pentan oder Hexan, aber auch deren halogenierte Derivate, wie beispielsweise Dichlormethan oder Perfluorpentan.

Alternativ kann die Schäumung auch durch Einstellung entsprechender Verfahrensparameter (Temperatur der Extrusion, Abkühlungsrate des Vollprofils) erreicht werden, wenn die Zusammensetzung Stoffe enthält, die unter den Verfahrensbedingungen gasförmig werden (z.B. Wasser, Kohlenwasserstoffe, etc.). Vorzugsweise handelt es sich dabei um geschlossene Poren.

Es können auch Mischungen von Zuschlagstoffen verwendet werden.

Als weitere Verstärkungsstoffe als Zuschlagstoffe seien beispielhaft Kohlenstofffasern (Carbonfasern, Graphitfasern), Borfasern, Aramid- (p- oder m-Aramidfasern (z.B. Kevlar® oder Nomex®, DuPont) oder deren Gemische) und Basaltfasern genannt, wobei die genannten Verstärkungsfasern als Langfasern oder Filamente mit den üblichen Verhältnissen (Länge zu Durchmesser), auch in Form einer Mischung von verschiedenen Fasern eingesetzt werden können. Es können auch thermoplastische Fasern (z.B. aus PP, PA, PET, PP-Siliziumfasern usw.) oder Pflanzenfasern, Naturfasern oder Fasern aus natürlichen Polymeren zugegeben werden.

Bei der Zugabe eines Zuschlagstoffs insbesondere eines Füllstoffs ist jedoch zu beachten, dass die Viskosität des Kompositwerkstoffs nicht unter einen Wert entsprechend einem MFI von PP von nicht unter 10 g /10 min sinkt.

Die Zuschlagstoffe liegen vorzugsweise mit einem Gehalt von 0 bis 30 Gew.-% vor, bevorzugt ist ein Gehalt an 0 bis 20 Gew.-%.

Die erfindungsgemäße Zusammensetzung wird in der Regel hergestellt, indem man die jeweiligen Bestandteile in bekannter Weise vermischt und bei Temperaturen von 200 °C bis 300 °C in üblichen Aggregaten wie Innenknetern, Extrudern und Doppelwellenschnecken schmelzcompoundiert und schmelzextrudiert.

Es kann auch zunächst eine Compoundierung des Thermoplasten und dem biologischen Füllmaterial vorgenommen werden.

Die Vermischung der einzelnen Bestandteile kann in bekannter Weise sowohl sukzessive als auch simultan erfolgen, und zwar sowohl bei etwa 20 °C (Raumtemperatur) als auch bei höherer Temperatur. Die Langglasfasern werden als kontinuierliche sogenannte Rovings oder Glasfaserbündel in einem Aufbau zugeführt, in den auch das geschmolzene Thermoplast bzw. Thermoplastblend zusammen mit dem biologischen Füllmaterial zugeführt wird (vgl. WO 95/28266 und US 6.530.246 B1). Dies bedeutet, dass die Langglasfasern oder andere Fasern wie Kohlenstoff- bzw. Aramidfasern, kontinuierlich dem Benetzungs- bzw. Imprägnierprozess unterzogen werden. Die Anzahl der einzelnen Filamente in einem Roving beträgt 200 bis 20000, bevorzugt 300 bis 10000, besonders bevorzugt 500 bis 2000.

Im sogenannten Direktverfahren für die Formteilherstellung kann die erfindungsgemäße Zusammensetzung in einem Spritzgießcompounder hergestellt und direkt zu Formteilen verarbeitet werden.

Bevorzugt handelt es sich um das für die Zusammensetzung beschriebene biologische Füllmaterial.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien. Diese Verarbeitungsschritte können nochmals zu einer Änderung der Teilchengröße und/oder der Länge der Langglasfaser führen.

Die Glasfasern liegen in den resultierenden Formteilen bevorzugt in einer mittleren Faserlänge von 0,5 bis 50 mm, bevorzugt 1,0 bis 40 mm, besonders bevorzugt von 1,5 bis 15 mm vor, wobei mindestens ein Anteil über 40 %, bevorzugt über 70 %, besonders bevorzugt über 80 % der Glasfasern eine Länge von über 1 mm aufweist.

Die Filamente sind im Langfaser-Granulat unidirektional angeordnet.

Die langglasfaserverstärkten Thermoplaste gemäß der Erfindung besitzen gute mechanische Eigenschaften, die die von sogenannten kurzfaserverstärkten Thermoplasten übertreffen. Mit kurzfaserverstärkten Thermoplasten bezieht man sich auf Materialien, bei denen die Fasern als Schnittglas in einem Extruder mit den weiteren Komponenten vermischt werden. Typischerweise zeigen die kurzfaserverstärkten Thermoplaste eine Glasfaserlänge im Granulat von 0,2 bis 0,4 mm. Die Fasern liegen im Kurzfaser-Granulat wirr, d.h. nicht geordnet vor.

Eine weitere Ausführungsform der Erfindung betrifft ein Verbundmaterial umfassend die Komponenten (a) und (b) der Zusammensetzung und Glasfasern, wobei die Glasfasern eine durchgehende unidirektionale Glasmatte sind oder bei dem die Glasfasern eine durchgehende zufällige Glasmatte sind.

Solche Verbundwerkstoffe werden auch als Glasmattenverstärkte Thermoplaste (GMT) bezeichnet. Die Mengenangaben gelten analog zu den Angaben zu der erfindungsgemäßen Zusammensetzung, wobei sich die Anteilsangaben für Langglasfasern auf die Glasfasermatten beziehen.

Die Glasfasern in dem Verbundmaterial weisen eine Länge von mindestens 0,5 mm auf, bis hin zu einer unendlichen Länge bei einer durchgehenden Glasmatte. Bevorzugt ist eine Länge von mindestens 5 mm, besonders bevorzugt mindestens 10 mm.

Die Glasmatten werden üblicherweise aus Glasfasern hergestellt, die eine einheitliche Fasergröße aufweisen, z. B. gemäß der bekannten Spezifikation (K oder T).

Ein weiterer Gegenstand der vorliegenden Erfindung ist ein Masterbatch umfassend mindestens einen Thermoplasten, mindestens ein biologisches Füllmaterial und Langglasfasern, entsprechend den vorstehend beschriebenen Ausführungsformen, mit dem Unterschied, dass der Masterbatch insbesondere hohe Anteile an biologischem Füllmaterial und/oder Langglasfasern aufweist. So ist im Masterbatch ein Anteil an biologischem Füllmaterial von mindestens 30 Gew.-% enthalten, bevorzugt 30 bis 60 %-Gew.-%. Der Anteil an Langglasfasern liegt bevorzugt bei mindestens 20 Gew.-%, bevorzugt bei 20 bis 60 Gew.-%. Als weitere Bestandteile können 5 bis 30 Gew.-% mindestens eines Thermoplasts und 0 bis 6 Gew.-% Zuschlagstoffe, bevorzugt 0,5 Gew.-% bis 6 Gew.-%, enthalten sein. Alles mit der Maßgabe, dass sich die Anteile der Bestandteile zu 100 Gew.-% ergänzen.

Bevorzugt liegen die Anteile im Masterbatch bei 30 bis 40 Gew.-% biologischem Füllstoff und 30 bis 40 Gew.-% Langglasfasern.

Beispiele für aus glasfaserverstärkten Thermoplasten gemäß der Erfindung hergestellte Formkörper sind Folien, Profile, Gehäuseteile jeder Art, z. B. für den Automobilinnenraum wie Instrumententafeln, Haushaltsgeräte wie Saftpressen, Kaffeemaschinen, Mixer; für Büromaschinen wie Monitore, Drucker, Kopierer; für Platten, Rohre, Elektroinstallationskanäle, Fenster, Türen und Profile für den Bausektor, Innenausbau und Außenanwendungen, wie Gebäudeinnen- oder -außenteile; auf dem Gebiet der Elektrotechnik wie für Schalter und Stecker.

Beispiele für Gebäudeinnenteile sind Geländer, beispielsweise für Treppen im Innenraum, und Paneele. Beispiele für Gebäudeaußenteile sind Dächer, Fassaden, Dachkonstruktionen, Fensterrahmen, Veranden, Geländer für Außentreppen, Terrassendielen und Verkleidungen beispielsweise für Gebäude oder Gebäudeteile. Beispiele für Profilteile sind technische Profile, Verbindungsscharniere, Formteile für Innenanwendungen wie beispielsweise Formteile mit komplexen Geometrien, Multifunktionsprofile oder Verpackungsteile und Dekorationsteile, Möbelprofile und Bodenprofile. Weiterhin sind erfindungsgemäße Verbundwerkstoffe für Verpackungen geeignet, beispielsweise für Kästen und Kisten. Ein weiterer Gegenstand der vorliegenden Erfindung ist die Verwendung von erfindungsgemäßen Verbundwerkstoffen als oder zur Herstellung von Möbeln, beispielsweise von Tischen, Stühlen, insbesondere Gartenmöbeln und Bänken wie beispielsweise Parkbänken, zur Herstellung von Profilteilen und zur Herstellung von Hohlkörpern wie beispielsweise Hohlkammerprofilen für Terrassendielen oder Fensterbänken.

Erfindungsgemäße Formteile zeigen vorzügliche Witterungsbeständigkeit auf, weiterhin einen hervorragenden Griff und sehr gute mechanische Eigenschaften wie beispielsweise Schlagzähigkeit, gutes Biege-E-Modul und eine geringe Wasseraufnahme, was zu einer guten Witterungsabhängigkeit führt.

Gegenstand der vorliegenden Erfindung ist somit auch ein Verfahren zur Herstellung von mit Langglasfasern verstärkten Formmassen enthaltend mindestens einen Thermoplasten und mindestens ein biologisches Füllmaterial.

Bevorzugt ist das Verfahren zur Herstellung der erfindungsgemäßen thermoplastischen Zusammensetzungen bei dem
i) ein Bündel an Langglasfasern/Filamente mit der Schmelze von gegebenenfalls mindestens einem Thermoplasten und mindestens einem biologischen Füllmaterial wie vorstehend beschrieben benetzt wird, und
ii) abgekühlt wird.

In einer bevorzugten Ausführungsform wird ein Granulat hergestellt. Dazu wird nach Schritt ii) das benetzte Faserbündel/Filamentbündel in Granulat geschnitten mit einer Schnittlänge von 5 bis 50 mm.

Die Schmelze wird aus den Komponenten (a) und (b) wie vorstehend beschrieben erhalten.

Das Verfahren kann auch weitere, nicht genannte Schritte aufweisen.

Die Erfindung betrifft auch die Verwendung des erfindungsgemäßen biologischen Füllmaterials mit einem Gehalt an Siliziumdioxid von mindestens 60 Gew.-%, bevorzugt mindestens 80 Gew.-%, besonders bevorzugt Reishülsenasche, als Füllmaterial in langglasfaserverstärkten Kompositkunststoffen, gemäß der erfindungsgemäßen Zusammensetzung oder des Masterbatches.

Die Erfindung betrifft auch die Verwendung des erfindungsgemäßen Masterbatches zur Herstellung von langglasfaserverstärkten Kunststoffen.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

### Beispiele:

Es wurden mehrere Zusammensetzungen aus Polypropylen (PP) oder Polyamid-66 (PA), Langglasfasern und weiteren Komponenten hergestellt. Dazu wurden zunächst in einem Kneter alle Bestandteile außer den Glasfasern schmelzcompoundiert, ehe die Glasfasern zugeführt wurden. Das extrudierte Granulat wurde zu Prüfkörpern weiterverarbeitet (Tabelle 2). V1 bis V4 sind Vergleichsexperimente. Dabei wurden Kneter mit Extruder oder Doppelschneckenextruder verwendet. Als biologische Komponente wurde Reishülsenasche verwendet (Bestandteile siehe Tabelle 1).

Die Eigenschaften der hergestellten Prüfkörper zeigt Tabelle 3.

Überraschenderweise wurde festgestellt, dass der biologische Anteil bei gleichem Gehalt an Langglasfasern zu einer weiteren deutlichen Erhöhung des E-Moduls führt. Besonders vorteilhaft ist aber eine deutliche Erhöhung der Kerbschlagzähigkeit. Dies zeigt, dass es insbesondere zu einem vorteilhaften Zusammenwirken des hohen Siliziumdioxidanteils des biologischen Füllstoff und den Langglasfasern kommt.

**Tabelle 1**

| | Probe 1 | Probe 2 |
|---|---|---|
| SiO₂ Gew.-% | 85-97 | 92,3 |
| Fe₂O₃ Gew. -% | 0,1-0,28 | 0,38 |
| Al₂O₃ Gew.-% | 0,1-0,44 | 0,28 |
| CaO Gew.-% | 0,1-0,27 | 0,25 |
| MgO Gew.-% | 0,1-0,4 | |
| K₂O Gew.-% | 0,2-1,3 | |
| Na₂O Gew.-% | 0,1-0,3 | |
| C Gew.-% | 0,1-1 | |
| Dichte g/cm³ | 2,2 | |
| Schmelzpunkt °C | 1710 | |

**Tabelle 2**

| Probe | **1** | **2** | **3** | **4** | **V1** | **V2** | **V3** | **V4** |
|---|---|---|---|---|---|---|---|---|
| Thermoplast | PP | PP | PA | PA | PP | PP | PP | PP |
| Glasfasern (Gew.-%) | 10 | 20 | 10 | 20 | 0 | 20 | 30 | 40 |
| Reishülsenasche (Gew.-%) | 10 | 20 | 10 | 20 | 0 | 0 | 0 | 0 |

**Tabelle 3**

| Probe | **1** | **2** | **3** | **4** | **V1** | **V2** | **V3** | **V4** |
|---|---|---|---|---|---|---|---|---|
| Zug E-Modul (GPa) nach ISO 527 | 3,3 | 5,7 | 6,1 | 8,9 | 1,45 | 2,9 | 7,0 | 9,0 |
| Zugfestigkeit [MPa] | 45 | 62 | 57 | 96 | | | | |
| Bruchdehnung [%] | 2,1 | 1,7 | 1 | 1,2 | | | | |
| Charpy-Kerbschlagzähigkeit bei 23 °C (kJ/m²) nach ISO 179/1eA ungekerbt | 23 | 23 | 8 | 14 | 5 | 4,5 | 12 | 16 |

## Patentansprüche

1. Zusammensetzung umfassend
a) mindestens einen Thermoplasten;
b) Füllmaterial mit einem Gehalt an Siliziumdioxid von mindestens 80 Gew.-%;
c) mindestens eine Langglasfaser mit einer Länge von mindestens 0,5 mm und einem Durchmesser von 3 bis 25 µm, wobei das biologische Füllmaterial Reishülsenasche umfasst.

2. Zusammensetzung nach Anspruch 1, **dadurch gekennzeichnet, dass** der Anteil des biologischen Füllmaterials bei mindestens 10 Gew.-% bezogen auf die gesamte Zusammensetzung liegt.

3. Zusammensetzung nach einem der Ansprüche 1 oder 2, **dadurch gekennzeichnet, dass** das biologische Füllmaterial Reishülsenasche ist.

4. Zusammensetzung nach einem der Ansprüche 1 bis 3, **dadurch gekennzeichnet, dass** das biologische Füllmaterial eine Dichte von bis zu 2,5 g/cm³ aufweist.

5. Zusammensetzung nach Anspruch 4, **dadurch gekennzeichnet, dass** das biologische Füllmaterial eine Dichte von 1,8 bis 2,3 g/cm³ aufweist.

6. Zusammensetzung nach einem der Ansprüche 1 bis 5, **dadurch gekennzeichnet, dass** der biologische Füllstoff eine spezifische Oberfläche von 15 bis 30 m²/g (BET-Messung mit Stickstoff) aufweist.

7. Zusammensetzung nach einem der Ansprüche 1 bis 6, **dadurch gekennzeichnet, dass** der mindestens eine Thermoplast ausgewählt ist aus der Gruppe umfassend Polyolefine, Polyamide, Polyimide, Polystyrole, Polycarbonate, Polyester, Polyether, Polysulfone oder deren Copolymerisate oder Mischpolymerisate.

8. Zusammensetzung nach einem der Ansprüche 1 bis 7, **dadurch gekennzeichnet, dass** der mindestens eine Thermoplast Polypropylen (PP) oder Polyethylen (PE) und deren Copolymerisate oder Mischpolymerisate ist.

9. Verfahren zur Herstellung thermoplastischer Zusammensetzungen nach einem der Ansprüche 1 bis 8, **dadurch gekennzeichnet, dass**
i) ein Bündel an Langglasfasern/Filamente mit einer Länge von mindestens 0,5 mm und einem Durchmesser von 3 bis 25 µm mit einer Schmelze von mindestens einem Thermoplasten und mindestens einem biologischem Füllmaterial benetzt wird;
ii) abgekühlt wird, wobei das biologische Füllmaterial einen Gehalt an Siliziumdioxid von mindestens 80 Gew.-% aufweist und das biologische Füllmaterial Reishülsenasche umfasst.

10. Verfahren nach Anspruch 9, **dadurch gekennzeichnet, dass** das benetzte Faserbündel in Granulat geschnitten wird mit einer Schnittlänge von 5 bis 50 mm.

11. Verfahren nach einem der Ansprüche 9 bis 10, **dadurch gekennzeichnet, dass** das biologische Füllmaterial Reishülsenasche ist.

12. Formkörper hergestellt aus einer Zusammensetzung gemäß einem der Ansprüche 1 bis 8.

13. Formkörper nach Anspruch 12, **dadurch gekennzeichnet, dass** die Langglasfasern/Filamente im Formkörper mit einer mittleren Faserlänge von 0,5 bis 50 mm vorliegen.

14. Masterbatch umfassend eine Zusammensetzung nach einem der Ansprüche 1 bis 8, **dadurch gekennzeichnet, dass** er einen Gehalt von mindestens 30 % Gew.-% an biologischem Füllmaterial aufweist.

15. Profile, Möbel, Gehäuseteile oder Folien umfassend eine Zusammensetzung nach einem der Ansprüche 1 bis 8.

## Claims

1. Composition comprising
(a) at least one thermoplastic;
b) filler material having a silica content of at least 80% by weight;
c) at least one long glass fiber having a length of at least 0.5 mm and a diameter of 3 to 25 µm, said biological filler material comprising rice husk ash.

2. Composition according to claim 1, **characterized in that** the proportion of the biological filler material is at least 10% by weight relative to the total composition.

3. Composition according to any of the claims 1 or 2, **characterized in that** said biological filler material is rice husk ash.

4. Composition according to any of the claims 1 to 3, **characterized in that** said biological filler material has a density of up to 2.5 g/cm³.

5. Composition according to claim 4, **characterized in that** the biological filler material has a density of 1.8 to 2.3 g/cm³.

6. Composition according to any of the claims 1 to 5, **characterized in that** the biological filler material has a specific surface area of 15 to 30 m²/g (BET measurement with nitrogen).

7. Composition according to any of the claims 1 to 6, **characterized in that** said at least one thermoplastic is selected from the group comprising polyolefins, polyamides, polyimides, polystyrenes, polycarbonates, polyesters, polyethers, polysulfones or copolymers or mixed polymerisates thereof.

8. Composition according to any of the claims 1 to 7, **characterized in that** the at least one thermoplastic is polypropylene (PP) or polyethylene (PE) and copolymers or mixed polymerisates thereof.

9. A method for the preparation of thermoplastic compositions according to any of claims 1 to 8, **characterized in that**
i) a bundle of long glass fibres/filaments having a length of at least 0.5 mm and a diameter of 3 to 25 µm is wetted with a melt of at least one thermoplastic and at least one biological filler material;
ii) cooling, said biological filler material having a silica content of at least 80% by weight and said biological filler material comprising rice husk ash.

10. Method according to claim 9, **characterized in that** the wetted bundle of fibres is cut into granules with a cutting length of 5 to 50 mm.

11. Method according to any of the claims 9 to 10, **characterized in that** the biological filler material is rice husk ash.

12. Shaped body made from a composition according to any of the claims 1 to 8.

13. Shaped body according to Claim 12, **characterized in that** the long glass fibres/filaments are present in the shaped body with an average fibre length of 0.5 to 50 mm.

14. Masterbatch comprising a composition according to any of claims 1 to 8, **characterized in that** it has a content of at least 30% by weight of biological filler material.

15. Profiles, furniture, housing parts or sheets comprising a composition according to any of the claims 1 to 8.

## Revendications

1. Composition comprenant
a) au moins un thermoplastique ;
b) un matériau de remplissage ayant une teneur en dioxyde de silicium d'au moins 80 % en poids ;
c) au moins une fibre de verre longue ayant une longueur d'au moins 0,5 mm et un diamètre de 3 à 25 µm, ledit matériau de remplissage biologique comprenant des cendres de balle de riz.

2. Composition selon la revendication 1, **caractérisée en ce que** la proportion du matériau de remplissage biologique est d'au moins 10% en poids par rapport à la composition totale.

3. Composition selon l'une des revendications 1 ou 2, **caractérisée en ce que** le matériau de remplissage biologique est de la cendre de balle de riz.

4. Composition selon l'une quelconque des revendications 1 à 3, **caractérisée en ce que** le matériau de remplissage biologique a une densité allant jusqu'à 2,5 g/cm³.

5. Composition selon la revendication 4, **caractérisée en ce que** le matériau de remplissage biologique a une densité de 1,8 à 2,3 g/cm³.

6. Composition selon l'une quelconque des revendications 1 à 5, **caractérisée en ce que** le matériau de remplissage biologique a une surface spécifique de 15 à 30 m²/g (mesure BET à l'azote).

7. Composition selon l'une quelconque des revendications 1 à 6, **caractérisée en ce que** le au moins un thermoplastique est choisi dans le groupe comprenant les polyoléfines, les polyamides, les polyimides, les polystyrènes, les polycarbonates, les polyesters, les polyéthers, les polysulfones ou leurs copolymères ou polymères mixtes.

8. Composition selon l'une quelconque des revendications 1 à 7, **caractérisée en ce que** le au moins un thermoplastique est le polypropylène (PP) ou le polyéthylène (PE) et leurs copolymères ou polymères mixtes.

9. Procédé de préparation de compositions thermoplastiques selon l'une quelconque des revendications 1 à 8, **caractérisé en ce que**
i) un faisceau de fibres/filaments de verre longs d'une longueur d'au moins 0,5 mm et d'un diamètre de 3 à 25 µm est mouillé avec une masse fondue d'au moins un matériau thermoplastique et d'au moins un matériau de remplissage biologique d'apport ;
ii) refroidissement, ledit matériau de remplissage biologique ayant une teneur en dioxyde de silicium d'au moins 80 % en poids et ledit matériau de remplissage biologique comprenant de la cendre de balle de riz.

10. Procédé selon la revendication 9, **caractérisé en ce que** le faisceau de fibres en contact avec le fluide est coupé en granulés d'une longueur de coupe de 5 à 50 mm.

11. Procédé selon l'une quelconque des revendications 9 à 10, **caractérisé en ce que** le matériau de remplissage biologique est de la cendre de balle de riz.

12. Corps façonné fabriqués à partir d'une composition selon l'une quelconque des revendications 1 à 8.

13. Corps façonné selon la revendication 12, **caractérisé en ce que** les fibres/filaments de verre longs sont présents dans le corps façonné avec une longueur moyenne des fibres de 0,5 à 50 mm.

14. Mélange-maître comprenant une composition selon l'une quelconque des revendications 1 à 8, **caractérisé en ce qu'**il a une teneur d'au moins 30% en poids de matiériau de remplissage biologique.

15. Profilés, meubles, pièces de boîtier ou films comprenant une composition selon l'une quelconque des revendications 1 à 8.
